# EUROPEAN PATENT SPECIFICATION

(11) **EP 1 872 761 B1**
(45) Date of publication and mention of the grant of the patent: **27.01.2010**
(21) Application number: 06116481.0
(22) Date of filing: 30.06.2006
(51) Int. Cl.: A61G 5/10

(54) **Angular castor adjustment device for wheelchairs**
Winkelverstellvorrichtung einer Schwenkrolle für einen Rollstuhl
Dispositif de réglage angulaire d'une roulette pivotante pour un fauteuil roulant

(43) Date of publication of application: 02.01.2008
(73) Proprietor: Invacare International Sàrl, 1196 Gland (CH)
(72) Inventor: Caprnja, Amir, 35239 Växjö (SE)
(74) Representative: Ganguillet, Cyril

(56) References cited:
- DE-U1- 8 914 424
- DE-U1- 29 817 702
- US-A- 5 743 545

## Description

### Technical Field

The present invention relates to an arrangement for fixing a castor attachment unit to a frame part of a wheelchair, to a wheelchair comprising the arrangement and to an eccentric comprising an eccentric head and a guiding part for a screw.

### Background Art and Problems to be Solved

Many wheelchairs provide the possibility of adjusting the seat of the wheelchair in accordance with the user's preference. In general, the seat may be lowered or raised and/or inclined forwards or backwards in the overall purpose of making the sitting in the wheelchair as comfortable as possible.

When a desired seat height and depth is found, it often occurs that the frame of the wheelchair is skewed and that the attachment for the castors is no longer perpendicular to the ground, but slightly inclined.

It is, however, disadvantageous if the longitudinal axis of a castor attachment unit of the wheelchair, generally corresponding to the swivel axle of the castor, is not strictly vertical, in particular when the castors are positioned on the front side of the wheelchair. In this case, the wheelchair's propelling ability may be negatively affected, forces act unfavourably within the housing of the castor's swivel axle thus increasing abrasion, and the castors freedom of swivelling in all directions is reduced.

It is, therefore, an objective of the present invention to provide means for adjusting the castor attachment unit so that the swivel axel of the castor remains perpendicular to the ground independently of the adjustment of the seat, in particular the adjustment of the seat's height and depth.

Therefore, another objective of the invention is to provide a possibility for easily and quickly adjusting the castor attachment unit of a wheelchair, so that the required feature of a perpendicular swivel axes is obtained.

On the other hand, it is not only important to make the adjustment quickly, but also reliably and constantly. That is to say that simply tightening a castor attachment unit using an eccentric with screws to the frame of the wheelchair at a selected angle turned out to be unsatisfactory over time. The screws tend to loosen upon prolonged driving and/or when experiencing shocks from going across obstacles with the wheelchair, resulting in a deviation from the adjusted angle.

On the other hand, the fixing of a castor attachment unit to the frame of a wheelchair with screws alone may not provide a quick adjustment, because they generally have to be completely undone and retightened when the longitudinal axis of the castor attachment is to be adjusted.

In summary, it is an objective of the present invention to provide a solution for fixing a castor attachment unit suitable to harbour the swivel axis of a castor of a wheelchair to the frame of the wheelchair, while at the same time permitting an adjustment of the angle between the castor attachment unit and the frame so that the swivel axis can be placed perpendicularly to the ground, with the castor attachment unit being preferably locked in a desired position so as to avoid movement of the castor attachment unit and concomitant modification of the angle upon utilisation, and while permitting quick and user-friendly re-adjustment of the angle if need be.

### Summary of the Invention

The present invention successfully proposes a novel type of eccentric, as claimed, which, when situated in a housing of the frame of a wheelchair can be rotated, thus adjusting the angle between the frame and a castor attachment unit. Remarkably, the eccentric comprises a head with a plurality of grooves designed to fit with a pin permanently fixed to the frame of the wheelchair, whereby turning of the eccentric and fitting a selected groove to the pin allows for locking the castor attachment to the frame of the wheelchair at a desired angle.

Accordingly, in a first aspect, the present invention provides an arrangement for fixing a castor attachment unit to a frame part of a wheelchair, wherein an angle between an axis of the castor attachment unit and an axis of the frame part is adjustable, the arrangement comprising an eccentric with a guiding part for a first screw and an eccentric head comprising a plurality of grooves, wherein a pin provided on the frame part is designed to fit in a selectable groove of the eccentric head.

In a further aspect, the present invention provides an eccentric comprising a guiding part for a first screw to be inserted eccentrically in the eccentric and an eccentric head comprising a plurality of grooves.

In a still further aspect, the present invention provides a wheelchair comprising the arrangement of the invention and/or the eccentric of the invention.

### Description of the Preferred Embodiments

The purpose of the present invention is to adjust the castor swivel axis to be perpendicular to the ground. Accordingly, the position of the castor attachment unit, which harbours said swivel axis and which is fixed to the frame of the wheelchair, needs to be adjusted. For the purpose of the present invention, it is considered that the castor attachment unit has an axis, which corresponds to the axis of the swivel axle of the castor. Also the frame of the wheelchair has an axis, which, for the purpose of the present invention, is the axis of the generally cylindrical frame part extending more or less vertically and to which the castor attachment unit is fixed. As set forth above, the axis of the frame is often moved due to adjustments of the seat and/or other functions of the wheelchair. Depending on the arrangement, the two axis are actually situated next to each other, separated by a distance determined by the dimensions of the castor attachment unit and the frame of the wheelchair. The angle between the two axis is thus determined by projection of the two axis onto a vertical plane, and by measuring the angle at the intersection of the two axis.

The device of the present invention is now illustrated by way of example with reference to the appended drawing figures, wherein,
FIGURE 1 shows the arrangement of the invention as used for fixing a castor attachment unit to a wheelchair, the castor also being seen, with its swivel axel housed in the attachment unit.
FIGURE 2 shows an exploded view of the different parts of the castor attachment unit, including the eccentric.
FIGURE 3 shows the eccentric of the present invention.

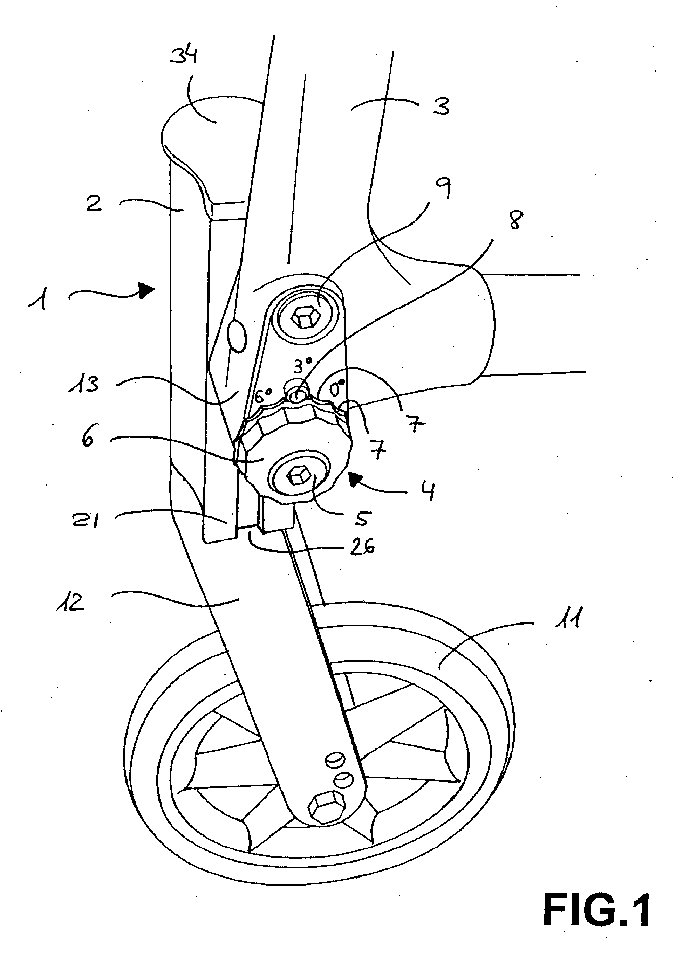

In Figure 1, the arrangement for fixing a castor attachment unit **2** to a wheelchair according to the invention is seen. The castor attachment unit **2** is fixed to a part **3** of the frame of the wheelchair. The frame of the wheelchair may be a single-piece, welded unit, or be composed of a number of parts, which may be detachably connected. In Figure 1, only the part of the wheelchair frame is shown, to which the castor attachment unit is fixed. Figure 1 shows the head **6** of an eccentric **4,** which harbours a first screw **5.** On the periphery of the head 6 of the eccentric **4,** a number of grooves **7** can be seen, any of which can be selected to fit to a pin **8** permanently attached to the frame part of the wheelchair. The pin may be permanently provided on the frame by welding or by moulding the frame part comprising the pin, for example.

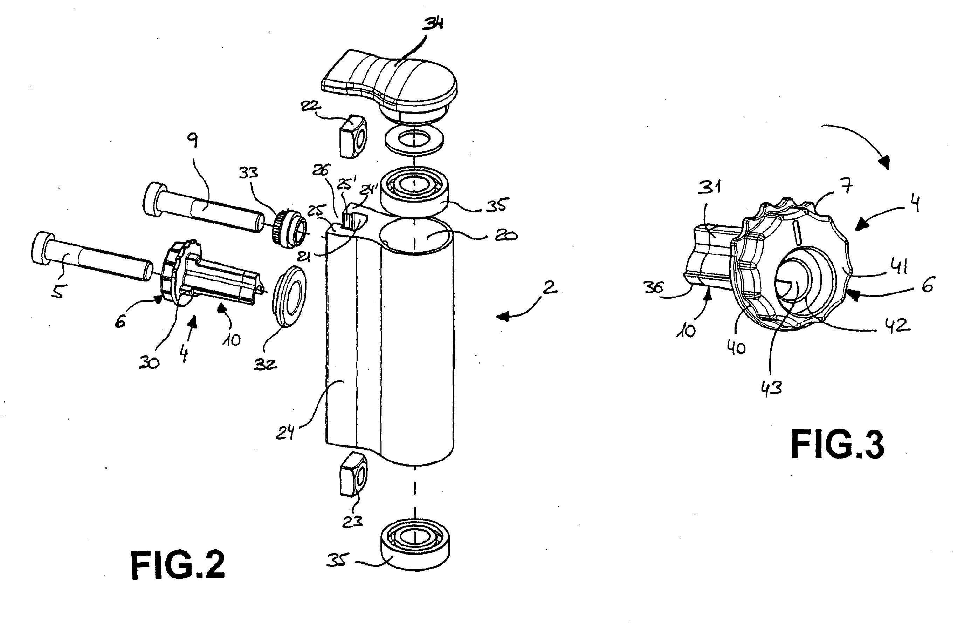

The head of the eccentric **4** has an overall disk or wheel-like form, with the grooves situated on the periphery of it, giving the eccentric head at least partly a tooth-wheel-like appearance. The head **4** lies on the frame **3,** with a guiding part **10** (see Figure 2) of the eccentric **4** for the first screw placed in a housing **13** of the frame part **3** of the wheelchair. In Figure 1, the location of the housing **13** is seen from the outside of the frame of the wheelchair, while the housing itself, having the shape of a hollow cylinder, is not visible with the eccentric 4 placed in it and the first screw **5** tightened.

As can be seen in Figure 1, five grooves are located on a part of the circumference of the wheel-shaped eccentric head **4,** but of course another number may be suitable equally well. In general, the grooves are arranged to cover about one quarter to one half of the circumference of the head of the eccentric. It is, in general, not necessary to have grooves around the entire circumference of the head of the eccentric, but it may be arranged this way, if preferred. The number of grooves will depend on the size of the eccentric head and on the size of the pin **8;** the smaller the pin, the narrower the grooves will be so that they can be fitted to the pin **8.**

It can be seen in Figure 1 that the numbers 6°, 3° and 0° are indicated on the frame part just above the grooves **7** of the eccentric **4.** These numbers give an indication of the change of the angle obtained by fitting a respective groove into the pin. In Figure 1, the groove placed in the middle is fitted to the pin, which results in a standard angle of 3° between the castor attachment unit and the frame. By fitting the groove on the very right in Figure 1 to the pin, an angle of 6° would be achieved, the middle groove being placed below the number 6. In contrast, when fitting the groove on the very left to the pin, the angle will be 0°.

In Figures 1 and 3, the eccentric **4** comprises five grooves, being situated next to each other so that the turning of the eccentric from one groove to the next, adjacent groove, results in a change of the angle of 1.5°.

In Figure 1, the head of the first screw **5** can be seen, and the eccentric position of the first screw **5** in the housing **13** of the frame part can be deduced from the eccentric position of the head of the first screw **5** on the head of the eccentric. Accordingly, the axis of the first screw **5** corresponds to the eccentric axis of the eccentric.

According to the represented embodiment, the arrangement according to the invention comprises an axis of pivoting **A1** between the castor attachment unit and the frame part **3,** which is placed at a distance from the eccentric. A second screw **9** may be provided along the axis of pivoting **A1,** which allows fixing of the castor attachment unit **2** to the frame part **3** at the axis of pivoting.

Also the second screw **9** can be seen in Figure 1, situated about 3 cm above the eccentric. As the skilled person will readily acknowledge, the distance between the second screw providing the axis of pivoting and the eccentric **4** determines the change of the angle between the axis of the castor attachment unit and the frame part of the wheelchair upon turning of the eccentric. The closer the second screw and the eccentric are together, the larger the change in the angle upon turning of the latter. Preferably, the eccentric and the second screw are separated by a distance of 2 to 10 cm, more preferably 2.5 to 6 cm, most preferably 3 to 5 cm. For the purpose of determining the distance between the eccentric and the second screw defining the axis of pivoting **A1,** the distance between the centre of the second screw and the centre of the housing **13** of the eccentric is measured. Although not necessary, it is preferred that the axis of pivoting **A1** is located above the eccentric, as depicted in Figure 1. It can equally be conceived that the eccentric is more or less vertically above the axis of pivoting, or laterally displaced.

The castor attachment unit **2** is also visible in Figure 1, even though it is partially covered by the frame part **3** of the wheelchair. The castor **11,** shown on the bottom of Figure 1, is fasted in a U-shaped frame **12,** with the swivelling of the castor being provided by a swivel axel (not visible) housed in a hollow cylinder that is part of the castor attachment unit **2.**

Figure 2 shows a preferred embodiment of the castor attachment unit **2** and the eccentric 4 in absence of the frame part **3.** In particular, a housing 20 has the shape of a hollow cylinder for lodging the castor's swivel axel. Also a rail **21** is visible, in which one or more nuts **22, 23,** if positioned therein, may be displaced in one dimension only, along the axis of the rail **21.**

The rail **21** comprises two walls **24, 24'** extending longitudinally in parallel to the axis of the castor attachment unit. A longitudinally extending opening **26** is comprised in the rail **21,** sufficiently wide for inserting the thread of the first screw **5,** and, optionally, the second screw **9,** whereby a nut **23** can be slidably placed within the rail to be guided in between the two walls and wherein the castor attachment unit **2** is attached to the frame part **3** of the wheelchair by tightening the thread of the first screw **5** present in the guiding part **10** of the eccentric to the nut placed in the rail.

The walls **24, 24'** of the rail extend longitudinally in parallel to the axis of the castor attachment unit. The walls **24, 24'** may be bulged inwards along the longitudinal axis to provide said longitudinally extending opening **26,** wherein bulges **25, 25'** of both walls retain the nut **22** and/or **23** within the rail and prevent, together with the walls, any other movement than a sliding movement in the rail in parallel to the axis of the castor attachment unit. The purpose of the rail **21** is to permit moving of the nut in a position where it can be fixed with a screw **5, 9,** and then to retain the castor attachment unit to the frame **3.** The nut **22** and/or **23** has preferably a rectangular outline. The walls **24, 24'** are extending in parallel of each other and separated from each other by a distance slightly (0.5 - 8 mm) larger than the width of the nut **22** and/or **23,** so that the nut fits into the rail and has a little space enabling easy displacement within the rail, while still warranting that the nut is large and/or broad enough to be retained by the bulges **25, 25'** of the walls.

Preferably, the nut **22** of the second screw is also situated within the rail **21** of the castor attachment **2.**

The eccentric **4** is also visible in Figure 2, this time with a view to the guiding part **10,** the function of which is to eccentrically stabilise the first screw **5** in the housing **13** of the frame part of the wheelchair. In the first place, the guiding part **10** provides an eccentric axis, which comprises, adjacently to the head of the eccentric **4,** bulges **30** which help stabilising the guiding part **10** eccentrically on one side of the housing **13.** A washer **32** is used to stabilise the eccentric guiding part **10** on the other end of the housing **13.**

The second screw **9,** providing an axis of pivoting between the castor attachment unit and the frame part **3** is also visible in Figure 2. An optional, washer-like element **33** is designed to fit in a hole (not shown) present in the longitudinally extending bulges **25, 25'.** When placed in said hole, the element **33** is blocked in longitudinal movement along the axis of the rail **21,** and stabilises the axis of pivoting as the second screw **9** is positioned in a hole of the frame part **3,** through the element **33** to be finally tightened to the castor attachment unit by the aid of the nut **22** retained in the rail **21.**

Further parts shown in Figure 2 include a cap **34** and bearings **35, 35'** for the swivel axis.

Figure 3 is a front-lateral view of the eccentric **4,** comprising an eccentric head **6,** having a wheel-like shape, as indicated above, and a guiding part **10.** It can be seen that, in the embodiment according to this figure, the grooves **7** are actually provided in a relatively thin plate **40,** which also serves as a surface to support the eccentric head **6** at the exterior of the housing, similar to a lid of the latter, while the guiding part **10** is completely positioned in the interior of the housing **13.** The eccentric head **6** further comprises a thicker, disk-like element, the thumb-wheel **41,** which further comprises a structured outline, designed to facilitate manual turning of the eccentric 4 by grasping the eccentric head 6 between the thumb and the index, for example.

An opening **43** is eccentrically provided in the eccentric head **6** of the eccentric **4,** which leads to the guiding part **10.** This opening **43,** in combination with the guiding part **10,** which has largely the shape of a longitudinal section of a hollow cylinder, is designed to harbour the first screw **5** and thus to provide an eccentric axis. The first screw **5,** when placed through the opening **43** in the eccentric **4,** is retained at its head by a protruding ring part **42** provided in said opening **43** in the head of the eccentric **4.**

The tightening of the first screw **5** with the nut **23** permits to durably and reliably, but also detachably, fix the castor attachment unit **2** at an adjustable position to the frame part of a wheelchair.

Also the guiding part **10** of the eccentric is visible in Figure 3, on the top of which a ridge **31** can be recognized. The ridge **31** and edges **36** of the guiding part **10** has to be placed through the hole of the washer **32** (Figure 2) and thus maintain the eccentric position of the first screw, once placed in the housing **13** of the frame part of the wheelchair.

An arrow in Figure 3 illustrates the possible turning of the eccentric **4** to the right. It can readily be recognised that when so doing, and imaging the eccentric **4** being placed in its housing **13,** the first screw **5,** if placed through the opening into the guiding part, will move upwards to the left. This movement will result in displacement of the axis of castor attachment unit **2,** around the axis of pivoting **A1** mentioned above.

The pivotal displacement of the castor attachment unit with respect to the frame of the wheelchair **3** when turning of the eccentric **4** is the result of a displacement of the first screw **5** placed in the guiding part **10** of the eccentric **4** along the circumference of a circle, which has its centre on the central axis of the eccentric **4.** This circle and its centre are not shown in the figures, but the underlying principle is the same as with any eccentric used in the art. It is thus clear that the first screw **5** is parallely displaced along a curve, defined by the circumference of the circle mentioned.

With the axis of pivoting **A1** not being displaceable, in contrast to the axis of the eccentric, it appears that the angle between the castor attachment unit and the frame part **3** is modified by turning the eccentric **4** within its housing **13,** thus displacing the castor attachment unit relative to the frame part at this position, while keeping both at a fixed axis **A1** at the axis of pivoting.

The angle between the castor attachment unit and the frame part of the wheelchair is finally determined by fitting a selected groove **7** of the head **6** of the eccentric to the pin and by tightening the first screw guided in the eccentric. Accordingly, the angle is adjustable by at least partly loosening the first screw **5** guided in the eccentric **4.** This is generally done with a tool facilitating the loosening and tightening of the respective screw. Further steps include drawing the eccentric at its head **6** so that a groove is no longer fitted to the pin **8,** turning the loosened eccentric at the eccentric head and thus modifying the angle between the axis of the castor attachment and the frame part until a desired angle is reached, fitting another groove of the eccentric head to the pin **8,** and tightening the first screw **5.**

It is thus an advantage of the present invention that the screws **5, 9** need not be removed completely for adjusting the angle. On the contrary, upon partial loosening of the first screw **5** of the eccentric **4,** the head **6** of the eccentric **4** may be lifted sufficiently to remove a groove of it from its fitting to the pin. The first screw **5** is loosened but still retained with some of its thread in the nut **23** so that the castor attachment unit keeps being attached to the frame part **3** by the loosened screw **5.** The pin **8** is arranged to be sufficiently short, so that only slight loosening of the first screw anchored in the nut **23** is necessary to remove the respective groove 7 by lifting it from its locked position to the pin **8.**

Once the respective goove 7 being lifted and removed from its fitting to the pin **8,** the loosened eccentric **4** can be manually turned until a desired angle (α) is reached. At the adjusted angle, the groove just above the pin is fitted again down to the pin, and the first screw **5** is tightened. By fitting a groove **7** to the pin **8,** any rotation of the eccentric is completely blocked, and the angle is reliably and constantly adjusted.

It goes without saying that the second screw **9,** defining the axis of pivoting A1, is preferably also loosened and re-tightened for effectuating the adjustment, for facilitating the pivoting brought about by the turning of the eccentric **4.** It is, of course, not essential which screw, **5** or **9,** is loosened and/or re-tightened first. However, during the turning of the eccentric, it is preferable that both screws are loosened. Equally, the respective groove is generally fitted to the pin at the desired angle before re-tightening any of them.

As indicated above, there are a plurality of grooves **7** provided on the outline of the eccentric **4.** It can be recognized from the figures and the present description that upon the adjustment procedure, a first groove is removed from the pin, and after the eccentric is turned, another groove will be fitted to the pin **8,** thus resulting in a different angle between the castor attachment unit and the frame of the wheelchair.

The adjustment of the angle is preferably accomplished by the sales personnel specialised in advice with wheelchairs. In general, the specialised personnel will first adjust the seat of the wheelchair according to the needs and preferences of a particular user. As mentioned in the problems underlying the invention, the height and depth of the seat may be adjusted, amongst other preferences, resulting in the swivel axel of the castors being slightly askew with respect to the perpendicular. The specialised personnel may, once all the major adjustments with respect of the wheelchair have been effectuated, proceed with the adjustment of the angle between each castor attachment unit and the frame of the wheelchair 3, so that the swivel axels of both castors resume their perpendicular position.

## Claims

1. An arrangement **(1)** for fixing a castor attachment unit **(2) to** a frame part **(3)** of a wheelchair, wherein an angle between an axis of the castor attachment unit **(2)** and an axis of the frame part is adjustable **characterized in that**, the arrangement comprises an eccentric (4) with a guiding part **(10)** for a first screw **(5)** and an eccentric head **(6)** comprising a plurality of grooves **(7),** wherein a pin **(8)** provided on the frame part **(3)** is designed to fit in a selectable groove **(7)** of the eccentric head **(6).**

2. The arrangement of claim 1 comprising an axis of pivoting A1 between the castor attachment unit **(2)** and the frame part, which is placed at a distance from the eccentric **(4).**

3. The arrangement of claim 2, in which a second screw **(9)** is provided along the axis of pivoting A1, which allows fixing of the castor attachment unit **(2)** to the frame part **(3)** at the axis of pivoting A1.

4. The arrangement of any of the preceding claims, wherein the angle is determined by fitting a selected groove **(7)** of the head of the eccentric to the pin **(8)** and by tightening the first screw **(5)** guided in the eccentric **(4).**

5. The arrangement of any of the preceding claims, wherein the angle is adjustable by at least partly loosening the first screw **(5)** guided in the eccentric **(4);** drawing the eccentric **(4)** at its head **(6)** so that the groove is no longer fitted to the pin **(8);** turning the loosened eccentric at the eccentric head **(6)** and thus modifying the angle between the axis of the castor attachment unit **(2)** and the frame part **(3)** until a desired angle is reached; fitting another groove of the eccentric head **(6)** to the pin **(8);** and tightening the first screw **(5).**

6. The arrangement of any of the preceding claims, wherein the guiding part of the eccentric **(10)** is configured to be situated in a housing **(13)** provided in the frame part **(3)** of the wheelchair.

7. The arrangement of any of the preceding claims, wherein the arrangement comprises a castor attachment unit **(2)** comprising, extending in parallel to the axis of the castor attachment unit, a rail **(21)** comprising two longitudinally extending walls **(24, 24')** comprising a longitudinally extending opening **(26)** sufficiently wide for inserting the thread of the first screw **(5),** and, optionally, the second screw **(9),** whereby a nut **(23)** can be slidably placed within the rail **(21)** to be guided in between the two walls **(24, 24')** and wherein the castor arrangement unit **(2)** is attached to the frame part **(3)** of the wheelchair by tightening the thread of the first screw **(5)** present in the guiding part **(10)** of the eccentric to the nut **(23)** placed in the rail **(21).**

8. The arrangement of any of the preceding claims, in which the castor attachment unit (2) comprises a hollow cylinder **(20)** for lodging a swivel axle of the castor **(11)** of the wheelchair.

9. An eccentric comprising a guiding part **(10)** for a screw **(5)** to be inserted eccentrically in the eccentric **(4)** and an eccentric head **(6)** comprising a plurality of grooves.

10. A wheelchair comprising the arrangement of any of claims 1-8 and/or the eccentric of claim 9.

## Patentansprüche

1. Anordnung (1) zum Befestigen einer Schwenkradbefestigungseinheit (2) an einem Rahmenteil (3) eines Rollstuhls, bei der ein Winkel zwischen einer Achse der Schwenkradbefestigungseinheit (2) und einer Achse des Rahmenteils einstellbar ist, **dadurch gekennzeichnet, dass** die Anordnung einen Exzenter (4) mit einem Führungsteil (10) für eine erste Schraube (5) und einen eine Vielzahl von Vertiefungen (7) umfassenden Exzenterkopf (6) umfasst, wobei ein auf dem Rahmenteil (3) vorgesehener Bolzen (8) so gestaltet ist, dass er in eine wählbare Vertiefung (7) des Exzenterkopfs (6) passt.

2. Anordnung nach Anspruch 1, umfassend eine Schwenkachse A1 zwischen der Schwenkradbefestigungseinheit (2) und dem Rahmenteil, die sich in einem Abstand vom Exzenter (4) befindet.

3. Anordnung nach Anspruch 2, bei der eine zweite Schraube (9) längs der Schwenkachse A1 vorgesehen ist, die das Befestigen der Schwenkradbefestigungseinheit (2) am Rahmenteil (3) bei der Schwenkachse A1 ermöglicht.

4. Anordnung nach einem der vorhergehenden Ansprüche, bei welcher der Winkel festgelegt wird, indem eine gewählte Vertiefung (7) des Kopfes des Exzenters mit dem Bolzen (8) zusammengepasst und die im Exzenter (4) geführte erste Schraube (5) angezogen wird.

5. Anordnung nach einem der vorhergehenden Ansprüche, bei welcher der Winkel eingestellt werden kann, indem die im Exzenter (4) geführte erste Schraube (5) zumindest teilweise gelockert wird; der Exzenter (4) an seinem Kopf (6) gezogen wird, so dass die Vertiefung nicht mehr mit dem Bolzen (8) zusammengepasst ist; der gelockerte Exzenter am Exzenterkopf (6) gedreht und so der Winkel zwischen der Achse der Schwenkradbefestigungseinheit (2) und dem Rahmenteil (3) verändert wird, bis ein gewünschter Winkel erreicht wurde; eine andere Vertiefung des Exzenterkopfs (6) mit dem Bolzen (8) zusammengepasst wird; und die erste Schraube (5) angezogen wird.

6. Anordnung nach einem der vorhergehenden Ansprüche, bei der das Führungsteil des Exzenters (10) so ausgebildet ist, dass es sich in einem Gehäuse (13) befindet, das im Rahmenteil (3) des Rollstuhls vorgesehen ist.

7. Anordnung nach einem der vorhergehenden Ansprüche, wobei die Anordnung eine Schwenkradbefestigungseinheit (2) umfasst, die eine parallel zur Achse der Schwenkradbefestigungseinheit verlaufende Schiene (21) umfasst, die zwei in Längsrichtung verlaufende Wände (24, 24') umfasst, die eine in Längsrichtung verlaufende Öffnung (26) umfassen, die ausreichend breit ist, damit das Gewinde der ersten Schraube (5) und wahlweise der zweiten Schraube (9) eingesetzt werden kann, wobei eine Mutter (23) verschiebbar in der Schiene (21) angeordnet sein kann, um zwischen den zwei Wänden (24, 24') geführt zu werden, und wobei die Schwenkradanordnungseinheit (2) am Rahmenteil (3) des Rollstuhls befestigt wird, indem das Gewinde der ersten Schraube (5), die sich im Führungsteil (10) des Exzenters befindet, in die in der Schiene (21) befindliche Mutter (23) geschraubt wird.

8. Anordnung nach einem der vorhergehenden Ansprüche, bei der die Schwenkradbefestigungseinheit (2) einen Hohlzylinder (20) zum Aufnehmen einer Schwenkachse des Schwenkrads (11) des Rollstuhls umfasst.

9. Exzenter umfassend ein Führungsteil (10) für eine außermittig in den Exzenter (4) einzusetzende Schraube (5) und einen Exzenterkopf (6), der eine Vielzahl von Vertiefungen umfasst.

10. Rollstuhl umfassend die Anordnung nach einem der Ansprüche 1 bis 8 und/oder den Exzenter nach Anspruch 9.

## Revendications

1. Agencement (1) pour fixer une unité de fixation (2) d'une roulette pivotante sur une partie de châssis (3) d'un fauteuil roulant, où un angle entre un axe de l'unité de fixation (2) de la roulette pivotante et un axe sur la partie de châssis est réglable, **caractérisé en ce que** l'agencement comprend un excentrique (4) avec une pièce de guidage (10) pour une première vis (5) et une tête excentrique (6) comprenant une pluralité de rainures (7), un ergot (8) réalisé sur la partie de châssis (3) étant conçu pour s'adapter dans une rainure (7) pouvant être choisie de la tête excentrique (6).

2. Agencement selon la revendication 1, comprenant un axe de pivotement A1 entre l'unité de fixation (2) de la roulette pivotante et la partie de châssis, qui est placé à une certaine distance de l'excentrique (4).

3. Agencement selon la revendication 2, dans lequel une deuxième vis (9) est prévue le long de l'axe de pivotement A1, qui permet la fixation de l'unité de fixation (2) de la roulette pivotante à la partie de châssis (3) au niveau de l'axe de pivotement A1.

4. Agencement selon l'une quelconque des revendications précédentes, dans lequel l'angle est déterminé en adaptant une rainure choisie (7) de la tête de l'excentrique à l'ergot (8) et en serrant la première vis (5) guidée dans l'excentrique (4).

5. Agencement selon l'une quelconque des revendications précédentes, dans lequel l'angle est ajustable en desserrant au moins partiellement la première vis (5) guidée dans l'excentrique (4) ; en tirant sur la tête (6) de l'excentrique (4) de manière telle que la rainure n'est plus adaptée à l'ergot (8) ; en tournant l'excentrique desserré au niveau de la tête (6) de l'excentrique et en modifiant ainsi l'angle entre l'axe de l'unité de fixation (2) de la roulette pivotante et la partie de châssis (3) jusqu'à ce que l'angle souhaité soit atteint ; en adaptant une autre rainure de la tête excentrique (6) à l'ergot (8) ; et en serrant la première vis (5).

6. Agencement selon l'une quelconque des revendications précédentes, dans lequel la pièce de guidage de l'excentrique (10) est configurée pour être située dans un logement (13) prévu dans la partie de châssis (3) du fauteuil roulant.

7. Agencement selon l'une quelconque des revendications précédentes, dans lequel l'agencement comprend une unité de fixation (2) d'une roulette pivotante comprenant, en s'étendant parallèlement à l'axe de l'unité de fixation d'une roulette pivotante, un rail (21) comprenant deux parois (24, 24') s'étendant longitudinalement comprenant une ouverture (26) s'étendant longitudinalement, suffisamment large pour y insérer le filetage de la première vis (5), et, éventuellement de la deuxième vis (9), un écrou (23) pouvant être placé par glissement dans le rail (21) pour être guidé entre les deux parois (24, 24') et dans lequel l'unité de fixation (2) de la roulette pivotante est attachée à la partie de châssis (3) du fauteuil roulant en serrant le filetage de la première vis (5) présente dans la pièce de guidage (10) de l'excentrique dans l'écrou (23) placé dans le rail (21).

8. Agencement selon l'une quelconque des revendications précédentes, dans lequel l'unité de fixation (2) de la roulette pivotante comprend un cylindre creux (20) pour loger un axe de pivotement de la roulette pivotante (11) du fauteuil roulant .

9. Excentrique comprenant une pièce de guidage (10) pour une vis (5) destinée à être insérée excentriquement dans l'excentrique (4) et une tête excentrique (6) comprenant une pluralité de rainures.

10. Fauteuil roulant comprenant l'agencement selon l'une quelconque des revendications 1-8 et/ou l'excentrique selon la revendication 9.
